(19) **Europäisches Patentamt**
**European Patent Office**
**Office européen des brevets**

(11) **EP 3 165 867 A1**

(12) **EUROPEAN PATENT APPLICATION**

(43) Date of publication:
**10.05.2017 Bulletin 2017/19**

(21) Application number: **15193498.1**

(22) Date of filing: **06.11.2015**

(51) Int Cl.:
*F28F 27/00* (2006.01)   *F28G 15/00* (2006.01)
*G01L 3/26* (2006.01)   *G01N 17/00* (2006.01)
*G05B 23/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Honeywell spol s.r.o.**
**14800 Prague 4 (CZ)**

(72) Inventor: **HAVLENA, Vladimir**
**Morris Plains, NJ New Jersey 07950 (US)**

(74) Representative: **Houghton, Mark Phillip**
**Patent Outsourcing Limited**
**1 King Street**
**Bakewell, Derbyshire DE45 1DZ (GB)**

Remarks:
Amended claims in accordance with Rule 137(2)
EPC.

(54) **INFERENTIAL SENSOR FOR INTERNAL HEAT EXCHANGER PARAMETERS**

(57)     Methods, devices, and systems for an inferential sensor for internal heat exchanger parameters are described herein. One device includes a memory (436), and a processor (434) configured to execute executable instructions stored in the memory (436) to receive a number of measured process variables of a heat exchanger(104, 218), including a number of measured inlet process variables and a number of measured outlet process variables, predict, using a dynamic differential model including the number of measured inlet process variables, internal parameters of the heat exchanger(104, 218) and a number of outlet process variables of the heat exchanger(104, 218), compare the number of measured outlet process variables with the number of predicted outlet process variables, and update, based on the comparison, the internal parameters of the heat exchanger(104, 218).

FIG. 1

**Description**

Technical Field

The present disclosure relates to methods, devices, and systems for an inferential sensor for internal heat exchanger parameters.

Background

Adaptation of heat exchanger model parameters may be necessary in order for precise model-based control and optimization of thermal processes of the heat exchanger in heating and cooling applications. Due to ageing phenomena like fouling, frost formation etc. the actual parameters of heat exchangers can differ from nominal parameters of nominal heat exchangers. For example, knowing the actual parameters of a heat exchanger used in heat pump and/or air-conditioning applications can allow for more efficient operation of the heat pump and/orair-conditioning systems that can be subject to ageing phenomena.

Steadystate models based on the logarithmic mean temperature difference concept can provide sufficient accuracy to estimate the parameters of the heat exchangerin steadystate conditions. However, for practical applications it may be necessary to estimate the internal state and parameters of the heat exchanger continuously under time varying operating conditions. Continuous estimation of the internal state and parameters under time varying conditions requires an accurate dynamic model.

Dynamic models based on finite element or finite volume approximation of distributed parameter models described by partial differential equations require high order approximation to achieve sufficient accuracy of the parameters and state estimates, as well as consistency with the logarithmic mean temperature model in steady state conditions. Therefore, dynamic models are not applicable for embedded controllers and optimization methods implemented in microcontrollers with limited computational power and memory. Currently available methods, devices, and systems that can provide sufficient steady state and dynamic accuracy may exceed the processing and memory resource capabilities of current microcontrollers.

Brief Description of the Drawings

Figure 1 illustrates a system for an inferential sensor for internal heat exchanger parameters, in accordance with one or more embodiments of the present disclosure.

Figure 2 illustrates a system for an inferential sensor for internal heat exchanger parameters, in accordance with one or more embodiments of the present disclosure.

Figure 3 is a flow chart of a method for an inferential sensor for internal heat exchanger parameters, in accordance with one or more embodiments of the present disclosure.

Figure 4 is a schematic block diagram of a controller for an inferential sensor for internal heat exchanger parameters, in accordance with one or more embodiments of the present disclosure.

Detailed Description

Methods, devices, and systems for an inferential sensor for internal heat exchanger parameters are described herein.For example, one or more embodiments includea memory, and a processor configured to execute executable instructions stored in the memory to receive a number of measured process variables of the heat exchanger, including a number of measured inlet process variables and a number of measured outlet process variables. The processor can further execute executable instructions stored in the memory to predict, using a dynamic differential model including the number of measured inlet process variables, internal parameters of the heat exchanger and a number of outlet process variables of the heat exchanger. The processor can additionally execute executable instructions stored in the memory to compare the number of measured outlet process variables with the number of predicted outlet process variables, and update, based on the comparison, the internal parameters of the heat exchanger.

An inferential sensor for internal heat exchanger parameters, in accordance with the present disclosure, can be based on a dynamic low order model that can provide an accurate approximation of a dynamic response of the heat exchanger in transient conditions, as well asbe consistent in steady state conditions. The low order dynamic model can be used to estimate changes of heat exchanger parameters (e.g., heat exchange surface temperatures, heat transfer coefficient, etc.) and predict outlet process variables.

Maintaining accurate inferential measurements of heat exchanger parameters using the low order dynamic model of a heat exchanger can bring significant economic benefits. For example, the low order dynamic model can be used to ensure efficient heat exchanger operation that may lead to utility cost savings, as well as ensuring the heat exchanger is functioning properly.

In the following detailed description, reference is made to the accompanying drawings that form a part hereof. The drawings show, by way of illustration, how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing.

As used herein, "a" or "a number of" something can refer to one or more such things. For example, "a number of process variables" can refer to one or more process variables.

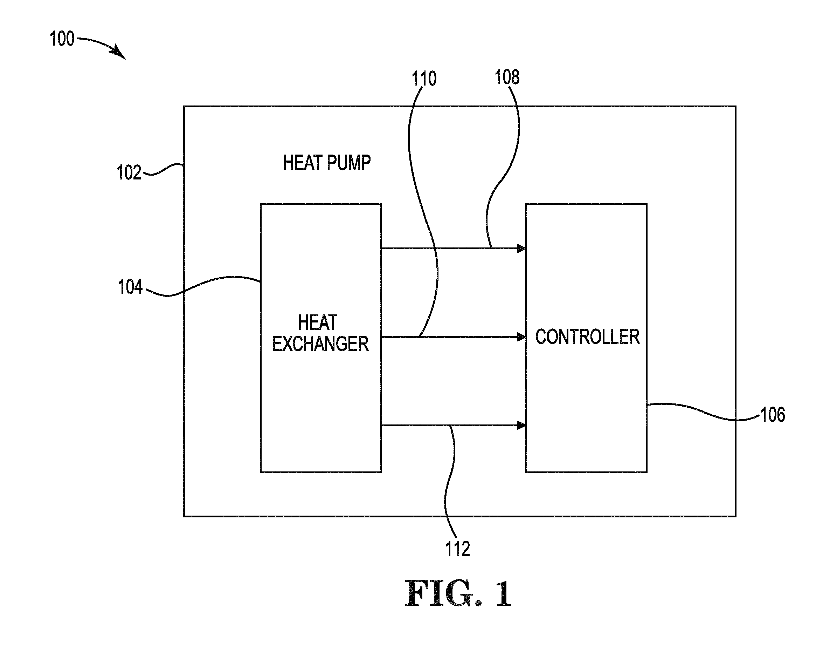

Figure 1 illustrates a system 100 for an inferential sensor for internal heat exchanger 104 parameters, in accordance with one or more embodiments of the present disclosure. As shown in Figure 1, the system 100 can include heat pump 102, heat exchanger 104, controller 106, a number of measured temperatures 108, a number of measured pressures 110, and a number of measured flow rates 112.

Controller 106 can receive, from heat exchanger 104, a number of measured process variables of heat exchanger 104. The number of measured process variables can include measured temperatures 108, measured pressures 110, and/or measured flow rates 112. The measured temperatures 108 can include measured inlet and outlet temperatures. Additionally, the measured pressures 110 can include measured inlet and outlet pressures. Further, the measured flow rates 112 can include a measured inlet and/or outlet flow rate.

As used herein, heat exchanger 104 can be a device that allows for the process of heat exchange (e.g., the transfer of thermal energy) between two media that are at different temperatures and separated by a solid wall (e.g., a heat exchange surface) to prevent the two media from mixing. For example, heat exchanger 104 can be a concentric tube heat exchanger with a parallel flow or a counter-flow arrangement. As another example, heat exchanger 104 can be a cross-flow heat exchanger that can be finned or un-finned.

As used herein, a heat exchange surface can be a medium through which a hot fluid of heat exchanger 104 can transfer heat to a cold fluid of heat exchanger 104. The heat transfer coefficient between the cold fluid of heat exchanger 104 and the hot fluid of heat exchanger 104 can be affected by the heat transfer from the hot fluid to the heat exchange surface, thermal resistance between the heat exchange surface, and heat transfer from the heat exchange surface to the cold fluid of heat exchanger 104.

Although heat exchanger 104 is described as being a concentric tube heat exchanger or a cross-flow heat exchanger, embodiments of the present disclosure are not so limited. For example, heat exchanger 104 can be any other type of heat exchanger.

Controller 106 can be part of heat pump 102. As used herein, heat pump 102 can be a device that moves thermal energy by absorbing heat from a cold space and releasing it into a warmer space. For example, heat pump 102 can utilize heat exchanger 104 to move thermal energy from a cold space to a working fluid (e.g., cold fluid of heat exchanger 104) and release from a working fluid in a different thermodynamic state to a warm space. Thermal energy is typically transported using a medium such as a liquid, vapor, and/or a mixture of the two.

Although controller 106 is shown in Figure 1 as part of heat pump 102, embodiments of the present disclosure are not so limited. For example, controller 106 can be located remotely from heat pump 102 and can receive a number of process variables of heat exchanger 104 via a wired or wireless network relationship.

The wired or wireless network can be a network relationship that connects heat pump 102 to controller 106. Examples of such a network relationship can include a serial communication line, and/or a local area network (LAN). Data from heat pump 102 can further be communicated to a distributed computing environment (e.g., a cloud computing environment), and/or the Internet using a wide area network (WAN), among other types of network relationships.

The number of measured inlet process variables can include an inlet temperature of the hot fluid of heat exchanger 104 and an inlet temperature of a cold fluid of heat exchanger 104. The number of measured outlet process variables can include an outlet temperature of the hot fluid of heat exchanger 104 and an outlet temperature of the cold fluid of heat exchanger 104. The inlet temperature of the hot fluid of heat exchanger 104 can be different than the outlet temperature of the hot fluid of heat exchanger 104 as the hot fluid transfers heat to a cold fluid of heat exchanger 104 as the hot fluid moves the length of heat exchanger 104. Further, the inlet temperature of the cold fluid of heat exchanger 104 can be different than the outlet temperature of the hot fluid of heat exchanger 104 as the cold fluid receives thermal energy (e.g., heat) from the hot fluid as the cold fluid moves the length of heat exchanger 104.

Although the number of measured inlet and outlet process variables are described as including an inlet and outlet temperature of the hot fluid of heat exchanger 104 and an inlet and outlet temperature of a cold fluid of heat exchanger 104, embodiments of the disclosure are not so limited. For example, the number of measured inlet and outlet process variables can include an inlet and outlet temperature of the hot fluid of heat exchanger 104, an inlet temperature of a cold fluid of heat exchanger 104, but not an outlet temperature of a cold fluid of heat exchanger 104, an inlet temperature of the hot fluid of heat exchanger 104, an inlet and outlet temperature of a cold fluid of heat exchanger 104, but not an outlet temperature of a hot fluid of heat exchanger 104, or any other combination thereof.

As used herein, the hot fluid of heat exchanger 104 can be any fluid suitable to enable the transfer of heat from one medium (e.g., hot fluid) to another medium (e.g., cold fluid). For example, the hot fluid can be water, oil, ammonia, alcohol, and/or any combination thereof in a liquid or vapor state, although embodiments of the present disclosure are not so limited.

As used herein, the cold fluid of the heat exchanger can be any fluid suitable to enable the transfer of heat from one medium (e.g., hot fluid) to another medium (e.g., cold fluid). For example, the cold fluid can be water, oil, ammonia, alcohol, and/or any combination thereof in a liquid or vapor state, although embodiments of the present disclosure are not so limited.

The number of measured inlet process variables can include an inlet flow rate of the hot fluid of heat exchanger 104 and an inlet flow rate of the cold fluid of heat exchanger 104. The number of measured outlet process variables can include an outlet flow rate of the hot fluid of heat exchanger 104 and an outlet flow rate of the cold fluid of heat exchanger 104. For example, the flow rates of the hot fluid and/or the cold fluid of heat exchanger 104 can be a flow rate for optimal heat transfer in heat exchanger 104.

Although the number of measured inlet and outlet process variables are described as including an inlet flow rate of the hot fluid of heat exchanger 104, an inlet flow rate of the cold fluid of heat exchanger 104, an outlet flow rate of the hot fluid of heat exchanger 104, and an outlet flow rate of the cold fluid of heat exchanger 104, respectively, embodiments of the present disclosure are not so limited. For example, the number of measured inlet and outlet process variables can include an inlet flow rate of the hot fluid of heat exchanger 104, an inlet flow rate of the cold fluid of heat exchanger 104, and an outlet flow rate of the hot fluid of heat exchanger 104, among other combinations of measured inlet and outlet flow rates.

The number of measured inlet process variables can include an inlet pressure of the hot fluid of heat exchanger 104 and an inlet pressure of the cold fluid of heat exchanger 104. The number of measured outlet process variables can include an outlet pressure of the hot fluid of heat exchanger 104 and an outlet pressure of the cold fluid of heat exchanger 104. For example, the pressures of the hot fluid and/or the cold fluid of heat exchanger 104 can be between 2 and 18 barA, although embodiments of the present disclosure are not so limited.

Although the number of measured inlet and outlet process variables are described as including an inlet and outlet pressure of the hot fluid of heat exchanger 104 and an inlet and outlet pressure of a cold fluid of heat exchanger 104, embodiments of the disclosure are not so limited. For example, the number of measured inlet and outlet process variables can include an inlet and outlet pressure of the hot fluid of heat exchanger 104, an inlet pressure of a cold fluid of heat exchanger 104, but not an outlet pressure of a cold fluid of heat exchanger 104, an inlet pressure of the hot fluid of heat exchanger 104, an inlet and outlet pressure of a cold fluid of heat exchanger 104, but not an outlet pressure of a hot fluid of heat exchanger 104, or any other combination thereof.

Controller 106 can predict, using a dynamic differential model including the number of measured inlet process variables, internal parameters of heat exchanger 104 and a number of outlet process variables of heat exchanger 104.

Internal parameters of heat exchanger 104 can include a heat transfer coefficient of heat exchanger 104. The heat transfer coefficient can describe the heat transfer that can occur in heat exchanger 104. The heat transfer coefficient of heat exchanger 104 may be less than a nominal heat transfer coefficient of a nominal heat exchanger. As used herein, a nominal heat exchanger can be a heat exchanger that does not experience losses due to fouling and/or other environmental factors.

For example, heat exchanger 104 may experience fouling due to rust or mineral deposits on the heat exchange surface of heat exchanger 104 that can cause higher thermal resistance to heat transfer in heat exchanger 104. As a result, a heat transfer coefficient of heat exchanger 104 may be less than the nominal heat transfer coefficient of the nominal heat exchanger.

Internal parameters of heat exchanger 104 can include metal temperatures of a heat exchange surface of heat exchanger 104. Temperatures of a heat exchange surface within heat exchanger 104 may not be easily measured. Controller 106 can therefore predict the metal temperatures of the heat exchange surface of heat exchanger 104 to calculate an efficiency of heat exchanger 104, as will be further described herein.

Controller 106 can determine an amount of heat transfer from the hot fluid to the cold fluid of heat exchanger 104using a logarithmic mean temperature of the number of measured inlet process variables of heat exchanger 104 and a number of predicted outlet process variables of heat exchanger 104. For example, controller 106 can utilize the measured inlet temperatures of the hot and cold fluids of heat exchanger 104, the measured inlet pressures of the hot and cold fluids of heat exchanger 104, the measured inlet flow rates of the hot and cold fluids of heat exchanger 104, predicted outlet temperatures of the hot and cold fluids of heat exchanger 104, predicted outlet pressures of the hot and cold fluids of heat exchanger 104, and predicted outlet flow rates of the hot and cold fluids of heat exchanger 104 to determine an amount of heat transfer from the hot fluid to the cold fluid of heat exchanger 104 using a logarithmic mean temperature.

Differential equations for the inlet temperatures and outlet temperatures of the hot fluid of heat exchanger 104, heat exchange surface of heat exchanger 104, and the cold fluid of heat exchanger 104 can be developed based on the heat transfer during transient conditions being characterized by the logarithmic mean temperature of the hot fluid, the cold fluid, and the heat exchange surface of heat exchanger 104, energy and mass conservation for the hot fluid of heat exchanger 104 and the cold fluid of heat exchanger 104, as well as energy conservation for the heat exchange surface of heat exchanger 104. As used herein, transient conditions can refer to internal state and parameters of heat exchanger 104 changing continuously under time varying operating conditions.

The logarithmic mean temperature used in steady state models can be described by equation 1:

$$\Delta T_{LMTD} = \frac{\Delta T_1 - \Delta T_2}{ln\Delta T_1 - ln\Delta T_2} = LMTD(\Delta T_1, \Delta T_2) \tag{1}$$

where $\Delta T_{LMTD}$ describes the logarithmic mean temperature, and $\Delta T_1$ and $\Delta T_2$ are mean temperaturesof the inlet and outlet of the hot cold and cold fluids of heat exchanger 104.

Utilizing the logarithmic mean temperature equation (e.g., equation 1), the mean temperature of the hot fluid of heat exchanger 104 (e.g., equation 2), the mean temperature of the metal of the heat exchange surface of heat exchanger 104 (e.g., equation 3), and the mean temperature of the cold fluid of heat exchanger 104 (e.g., equation 4) can be obtained as a logarithmic mean temperature between the inlet side and outlet side of heat exchanger 104 and zero reference temperature:

$$T_h = LMTD(T_{h1}, T_{h2}) \tag{2}$$

$$T_m = LMTD(T_{m1}, T_{m2}) \tag{3}$$

$$T_c = LMTD(T_{c1}, T_{c2}) \tag{4}$$

where $T_h$ is the logarithmic mean temperature of the hot fluid of heat exchanger 104, $T_m$ is the logarithmic mean temperature of the metal of the heat exchange surface of heat exchanger 104, and $T_c$ is the logarithmic mean temperature of the cold fluid of heat exchanger 104. $T_h$, $T_m$, and $T_c$ can be calculated as logarithmic mean temperature differences between the fluid inlet and outlet temperatures, and a reference zero temperature.

A heat and mass balance of the hot fluid, the cold fluid, and the metal temperature of the heat exchange surface of heat exchanger 104 results in the following differential equations (e.g., equations 5-7) describing the internal parameters (e.g., boundary conditions for temperatures related to the hot fluid, heat exchanger surface, and cold fluid of heat exchanger 104) $T_{h1}$, $T_{h2}$, $T_{m1}$, $T_{m2}$, $T_{c1}$, $T_{c2}$ as they change with time:

$$m_h c_h \left( \frac{\partial T_h}{\partial T_{h1}} \frac{dT_{h1}}{dt} + \frac{\partial T_h}{\partial T_{h2}} \frac{dT_{h2}}{dt} \right) = F_h c_h (T_{h1} - T_{h2}) - \alpha_h A_h (T_h - T_m) \tag{5}$$

$$m_m c_m \left( \frac{\partial T_m}{\partial T_{m1}} \frac{dT_{m1}}{dt} + \frac{\partial T_m}{\partial T_{m2}} \frac{dT_{m2}}{dt} \right) = \alpha_h A_h (T_h - T_m) - \alpha_c A_c (T_m - T_c) \tag{6}$$

$$m_c c_c \left( \frac{\partial T_c}{\partial T_{c1}} \frac{dT_{c1}}{dt} + \frac{\partial T_c}{\partial T_{c2}} \frac{dT_{c2}}{dt} \right) = F_c c_c (T_{c2} - T_{c1}) + \alpha_c A_c (T_m - T_c) \tag{7}$$

where $m_h$, $m_m$, $m_c$ denote individual masses of the hot fluid, heat exchange surface, and cold fluid of heat exchanger 104, respectively, $c_h$, $c_m$, $c_c$ denote the specific heats of the hot fluid, heat exchange surface, and cold fluid of heat exchanger 104, respectively, $F_h$, $F_c$ denote the mass flows of the hot fluid and cold fluid of heat exchanger 104, respectively, $A_h$, $A_c$ are surface areas between the heat exchange surface and hot fluid or cold fluid of heat exchanger 104, and $\alpha_h$, $\alpha_c$ are heat transfer coefficients between the heat exchange surface and hot fluid or cold fluid of heat exchanger 104.

The differential equations represented by equations 5-7can be used to evaluateinternal parameters of heat exchanger 104. The internal parameters of heat exchanger 104 can correspond to individual inlet and outlet temperatures of the hot fluid, heat exchange surface, and cold fluid of heat exchanger 104.

The dynamic model is fully consistent with the logarithmic mean temperature model in steady state and transientconditions, as well as observes mass and energy conservation laws. The dynamic model can be used to predict internal parameters of heat exchanger 104, such as a heat transfer coefficient and other parameters for optimization (e.g., thermal cycle performance optimization) in steady state, as well as during transient conditions.

Controller 106 can calculate an efficiency of heat exchanger 104 using the predicted internal parameters of heat exchanger 104 and the number of measured process variables of heat exchanger 104. That is, the efficiency of heat exchanger 104 can be calculated using the internal parameters of heat exchanger 104 and the number of measured inlet process variables and the number of measured outlet process variables.

Controller 106 can compare the number of measured outlet process variables with the number of predicted outlet process variables. For example, the measured outlet temperatures of the hot and cold fluids of heat exchanger 104 can be compared to the predicted outlet temperatures of the hot and cold fluids of heat exchanger 104. Additionally, the measured outlet pressures of the hot and cold fluids of heat exchanger 104 can be compared to the predicted outlet pressures of the hot and cold fluids of heat exchanger 104. Further, the measured outlet flow rates of the hot and cold fluids of heat exchanger 104 can be compared to the predicted outlet flow rates of the hot and cold fluids of heat exchanger 104. The internal parameters of heat exchanger 104 may change during operation of heat exchanger 104, resulting in a change in the measured outlet process variables. The change can result from a change of the internal parameters of heat exchanger 104.

In some embodiments, fouling can result in a change in the internal parameters of heat exchanger 104. Fouling can occur when impurities, rust, and/or other deposits occur on the heat exchange surface of a heat exchanger (e.g., heat exchanger 104). For example, the hot fluid and/or cold fluid of heat exchanger 104 can include impurities such as minerals and/or other contaminants that can deposit onto a heat exchange surface of heat exchanger 104, causing a decrease in the amount of heat transferred from the hot fluid to the cold fluid. The decrease in heat transfer is due to a higher thermal resistance of the heat transfer surface as a result of fouling. As another example, frost can occur on the heat exchange surface between the working fluid and air when air moisture condenses on the heat exchange surface and freezes. The frost can act as an insulator that may cause a decrease in the amount of heat transfer of heat exchanger 104.

Controller 106 can update, based on the comparison of the number of measured outlet process variables with the number of predicted outlet process variables, the internal parameters of heat exchanger 104. That is, if the actual internal parameters of heat exchanger 104 have changed (e.g., due to fouling), the predicted internal parameters of heat exchanger 104 can be updated based on the comparison.

For example, if the actual heat transfer coefficient of heat exchanger 104 is smaller than the predicted heat transfer coefficient, the low order dynamic model can predict a lower outlet temperature of the cold fluid of heat exchanger 104. Knowing this difference, the low order dynamic model can update the heat transfer coefficient of heat exchanger 104.

In some embodiments, heat exchanger 104 can be a liquid-liquid heat exchanger. For example, the hot fluid and cold fluid of heat exchanger 104 can remain in a liquid state throughout the heat exchange process. That is, no boiling and/or evaporation of the hot and/or cold fluid of heat exchanger 104 occurs during the heat exchange process in heat exchanger 104. The liquid-liquid heat exchanger can be accurately modeled using the number of measured process variables of heat exchanger 104.

In some embodiments, heat exchanger 104 can be a phase change heat exchanger. A phase change heat exchanger can include partial boiling and/or evaporation of a liquid of heat exchanger 104 (e.g., the hot fluid or the cold fluid).

Heat exchanger 104 can additionally be accurately modeled as a phase change heat exchanger using a logarithmic mean temperature of the liquid portion of heat exchanger 104 and a logarithmic mean temperature of the a boiling and/or evaporating portion of heat exchanger 104. The implementation of the inferential sensor for internal heat exchanger parameters can utilize other thermodynamic state variables, such as enthalpies of individual fluids (e.g., hot fluid and cold fluids) of heat exchanger 104.

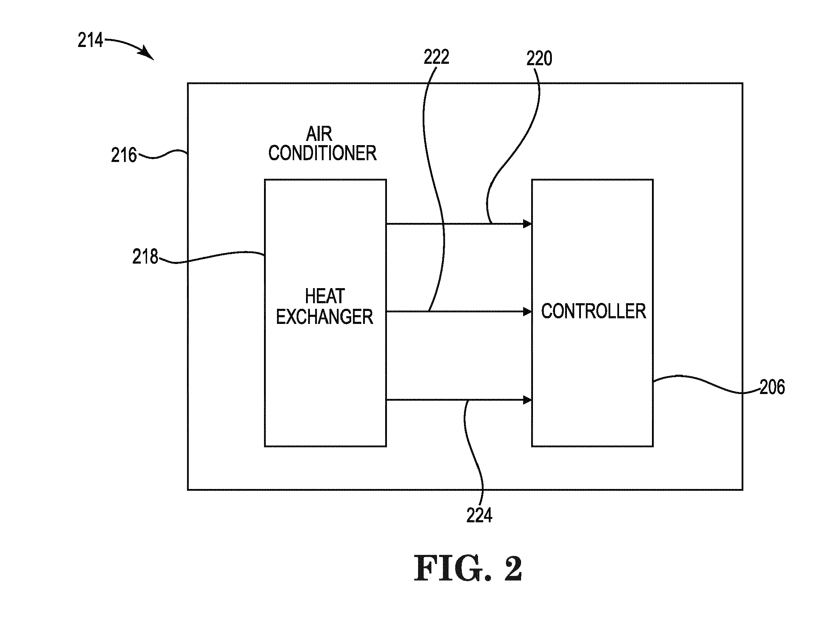

Figure 2 illustrates a system214 for an inferential sensor for internal heat exchanger 218 parameters, in accordance with one or more embodiments of the present disclosure.As shown in Figure 2, the system 214 can include air-conditioner 216, heat exchanger 218, controller 206, a number of measured temperatures 220, a number of measured pressures 222, and a number of measured flow rates 224.

Similar to the embodiment described in Figure 1, controller 206 can receive, from heat exchanger 218, a number of process variables of heat exchanger 218. The number of measuredprocess variables of heat exchanger 218 can include a measured temperatures 220, measured pressures 222, and/or measured flow rates 224. The measured temperatures 220 can include measured inlet and outlet temperatures. Additionally, the measured pressures 222 can include measured inlet and outlet pressures. Further, the measured flow rates 224 can include a measured inlet and/or outlet flow rate.

Controller 206 can be part of air-conditioner 216. As used herein, air-conditioner 216 can be a device that lowers the air temperature of a space. Air-conditioner 216 can lower the air temperature using heat exchanger 218.

Although controller 206 is shown in Figure 2 as part of air-conditioner 216, embodiments of the present disclosure are not so limited. For example, controller 206 can be located remotely from air-conditioner 216 and can receive a number of process variables of heat exchanger 218 via a wired or wireless network relationship.

The wired or wireless network can be a network relationship that connects air-conditioner 216 to controller 206. Examples of such a network relationship can include a serial communication line, and/or a local area network (LAN). Data from air-conditioner 216 can further be communicated to a distributed computing environment (e.g., a cloud computing environment), and/or the Internet using a wide area network (WAN), among other types of network relationships.

Controller 206 can determine an amount of heat transfer from the hot fluid to the cold fluid of air-conditioner 216using a logarithmic mean temperature of the number of measured inlet process variables of air-conditioner 216 and a number of predicted outlet process variables of air-conditioner 216. For example, controller 206 can utilize the measured inlet temperatures of the hot and cold fluids of air-conditioner 216, the measured inlet pressures of the hot and cold fluids of air-conditioner 216, the measured inlet flow rates of the hot and cold fluids of air-conditioner 216, predicted outlet temperatures of the hot and cold fluids of air-conditioner 216, predicted outlet pressures of the hot and cold fluids of air-conditioner 216, and predicted outlet flow rates of the hot and cold fluids of air-conditioner 216 to determine an amount of heat transfer from the hot fluid to the cold fluid of heat exchanger 218 using a logarithmic mean temperature.

Controller 206 can compare the number of measured outlet process variables with the number of predicted outlet process variables. For example, the measured outlet temperatures of the hot and cold fluids of heat exchanger 218 can be compared to the predicted outlet temperatures of the hot and cold fluids of heat exchanger 218. Additionally, the measured outlet pressures of the hot and cold fluids of heat exchanger 218 can be compared to the predicted outlet pressures of the hot and cold fluids of heat exchanger 218. Further, the measured outlet flow rates of the hot and cold fluids of heat exchanger 218 can be compared to the predicted outlet flow rates of the hot and cold fluids of heat exchanger 218. The internal parameters of heat exchanger 218 may change during operation of heat exchanger 218, resulting in a change in the measured outlet process variables. The change can result from a change of the internal parameters of heat exchanger 218.

Controller 206 can update, based on the comparison of the number of measured outlet process variables with the number of predicted outlet process variables, the internal parameters of heat exchanger 218. For example, the internal parameters of heat exchanger 218 can be updated based on the comparison.

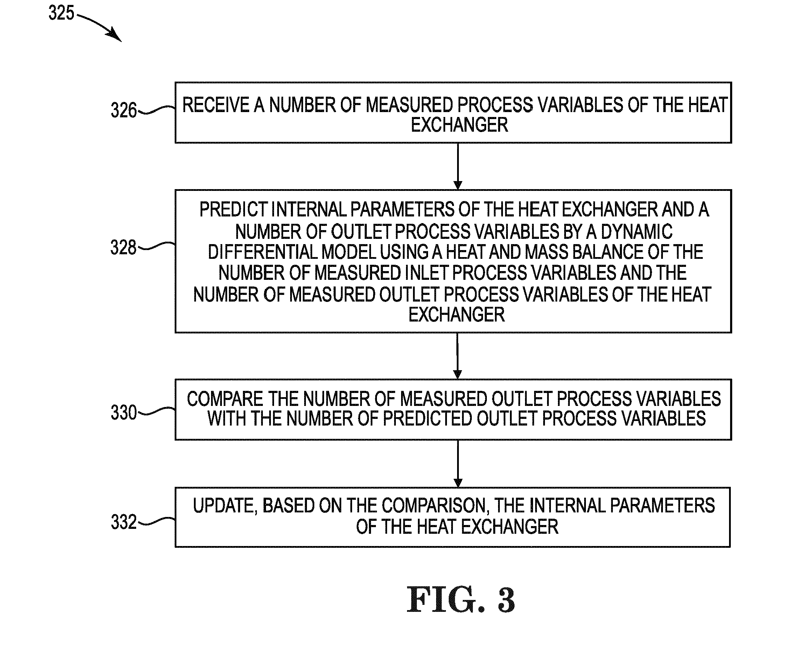

Figure 3 is a flow chart of a method 325 for an inferential sensor for internal heat exchanger parameters, in accordance with one or more embodiments of the present disclosure. Method 325 can be performed by, for example, controllers 106, 206, and 406, as described in connection with Figures 1, 2, and 4, respectively.

At block 326 of method 325, the controller can receive a number of measured process variables of the heat exchanger (e.g., heat exchanger 104, 218, previously described in connection with Figures 1 and 2, respectively). For example, the controller can receive a number of measured temperatures (e.g., measured temperatures 108, 220, previously described in connection with Figures 1 and 2, respectively) of the heat exchanger, a number of measured pressures (e.g., number of measured pressures 110, 222, previously described in connection with Figures 1 and 2, respectively) of the heat exchanger,and a number of measured flow rates (e.g., number of measured flow rates 112, 224, as previously described in connection with Figures 1 and 2, respectively).

At block 328 of method 325, the controller can predict internal parameters of the heat exchanger and a number of outlet process variables by a dynamic differential model using a heat and mass balance of the number of measured inlet process variables and the number of measured outlet process variables of the heat exchanger.For example, controller 106 can utilize a heat and mass balance (e.g., equations5-7, previously described in connection with Figure 1) of the measured inlet temperatures of the hot and cold fluids of the heat exchanger, measured inlet pressures of the hot and cold fluids of the heat exchanger, measured inlet flow rates of the hot and cold fluids of the heat exchanger, predicted outlet temperatures of the hot and cold fluids of the heat exchanger, predicted outlet pressures of the hot and cold fluids of the heat exchanger, and predicted outlet flow rates of the hot and cold fluids of the heat exchanger to predict internal variables of the heat exchanger.

At block 330 of method 325, the controller can compare the number of measured outlet process variables with the number of predicted outlet process variables. That is, the controller can use the heat exchanger model to compare the measured outlet process variables with the values predicted by the model. The controller can use the difference to update model parameters that define the heat transfer of the heat exchanger.

At block 332 of method 325, the controller can update, based on the comparison of the measured outlet process variables with the values predicted by the model, the internal parameters of the heat exchanger. For example, if the actual internal parameters of heat exchanger 104 have changed (e.g., due to fouling, etc.), the internal parameters of the heat exchanger can be updated based on the comparison.

The controller can update a heat transfer coefficient of the heat exchanger. For example, a predicted heat transfer coefficient of the heat exchanger can be updated in response to a change in the actual heat transfer coefficient of the heat exchanger.

The controller can update metal temperatures of a heat exchange surface of the heat exchanger. For example, a predicted metal temperature of the heat exchange surface can be updated in response to a change in the actual metal temperature of the heat exchange surface of the heat exchanger.

Method 325 can be performed while the heat exchanger is operating. For example, method 325 can be performed during operation of the heat exchanger. That is, the heat exchanger does not need to be removed from service while method 325 is performed. Further, method 325 can be continuously repeated during operation of the heat exchanger. That is, the method 325 can be continuously repeated todynamically model and predictchanges of the heat exchanger, as well as continuously update predicted values (e.g., internal parameters and/or outlet process variables).

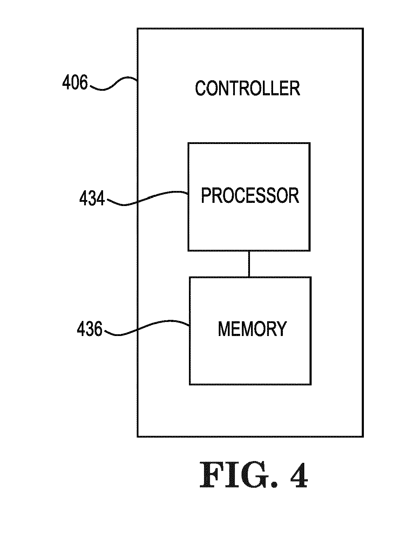

Figure 4 is a schematic block diagram of a controller406for an inferential sensor for internal heat exchanger parameters (e.g., heat exchanger 104, 218, previously described in connection with Figures 1 and 2, respectively), in accordance with one or more embodiments of the present disclosure. Controller406 can be, for example, controllers 106 and206, previously described in connection with Figures 1 and 2, respectively. Controller406 can include amemory 436 and a processor 434 configured for an inferential sensor for internal heat exchanger parameters in accordance with the present disclosure.

The memory 436 can be any type of storage medium that can be accessed by the processor 434 to perform various examples of the present disclosure. For example, the memory 436 can be a non-transitory computer readable medium having computer readable instructions (e.g., computer program instructions) stored thereon that are executable by the processor 434 toreceive a number of process variables of the heat exchanger.Further, processor 434 can execute the executable instructions stored in memory 436to predict internal parameters of a heat exchanger and a number of outlet process variables of the heat exchanger, compare a number of measured outlet process variables with the number of predicted outlet process variables, and update, based on the comparison, the internal parameters of the heat exchanger.

The memory 436can be volatile or nonvolatile memory. The memory 436can also be removable (e.g., portable) memory, or non-removable (e.g., internal) memory. For example, the memory 436can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 436 is illustrated as being located within controller 406, embodiments of the present disclosure are not so limited. For example, memory 436 can also be located internal to another computing resource (e.g., enabling computer readable instructions to be downloaded over the Internet or another wired or wireless connection).

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodimentsillustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

**Claims**

1. An inferential sensor for internal heat exchanger parameters, comprising:

   a memory (436);
   a processor (434) configured to execute executable instructions stored in the memory (436) to:

      receive a number of measured process variables of the heat exchanger (104, 218), including:

         a number of measured inlet process variables; and
         a number of measured outlet process variables;

      predict, using a dynamic differential model including the number of measured inlet process variables:

         internal parameters of the heat exchanger(104, 218); and
         a number of outlet process variables of the heat exchanger(104, 218);

      compare the number of measured outlet process variables with the number of predicted outlet process variables; and
      update, based on the comparison, the internal parameters of the heat exchanger(104, 218).

2. The inferential sensor of claim 1, wherein the number of measured inlet process variables include:

   an inlet temperature of the hot fluid of the heat exchanger(104, 218);
   an inlet temperature of the cold fluid of the heat exchanger(104, 218);
   an inlet pressure of the hot fluid of the heat exchanger(104, 218);
   an inlet pressure of the cold fluid of the heat exchanger(104, 218);
   an inlet flow rate of the hot fluid of the heat exchanger(104, 218); and
   an inlet flow rate of the cold fluid of the heat exchanger(104, 218).

3. The inferential sensor of claim 1, wherein the number of measured outlet process variables include:

   an outlet temperature of the hot fluid of the heat exchanger(104, 218);
   an outlet temperature of the cold fluid of the heat exchanger(104, 218);
   an outlet pressure of the hot fluid of the heat exchanger(104, 218);
   an outlet pressure of the cold fluid of the heat exchanger(104, 218);
   an outlet flow rate of the hot fluid of the heat exchanger(104, 218); and
   an outlet flow rate of the cold fluid of the heat exchanger(104, 218).

4. The inferential sensor of claim 1, wherein the internal parameters of the heat exchanger(104, 218) include a heat transfer coefficient of the heat exchanger(104, 218).

5. The inferential sensor of claim 1, wherein the internal parameters of the heat exchanger(104, 218) include metal temperatures of a heat exchange surface of the heat exchanger(104, 218).

6. The inferential sensor of claim 1, wherein the processor (434) is configured to execute the instructions calculate an efficiency of the heat exchanger(104, 218) using the internal parameters of the heat exchanger(104, 218) and the number of measured process variables of the heat exchanger(104, 218).

7. The inferential sensor of claim 1, wherein the predicted number of outlet process variables include:

   a predicted outlet temperature of the hot fluid of the heat exchanger(104, 218);
   a predicted outlet temperature of the cold fluid of the heat exchanger(104, 218);
   a predicted outlet pressure of the hot fluid of the heat exchanger(104, 218);

EP 3 165 867 A1

a predicted outlet pressure of the cold fluid of the heat exchanger(104, 218);
a predicted outlet flow rate of the hot fluid of the heat exchanger(104, 218); and
a predicted outlet flow rate of the cold fluid of the heat exchanger(104, 218).

8. The inferential sensor of claim 1, wherein the dynamic differential model includes a heat and mass balance of the number of measured inlet process variables and the number of measured outlet process variables, wherein the number of measured inlet process variables and the number of measured outlet process variables change with time, and wherein:

the heat and mass balance determines a metal temperature of the heat exchange surface of the heat exchanger(104, 218); and
heat transfer from the hot fluid of the heat exchanger(104, 218) to the cold fluid of the heat exchanger(104, 218) is determined by a logarithmic mean temperature between a temperature of the hot fluid, the metal temperature of the heat exchange surface of the heat exchanger(104, 218), and a temperature of the cold fluid of the heat exchanger(104, 218).

9. The inferential sensor of claim 1, wherein a nominal heat exchanger has a nominal heat transfer coefficient.

10. The inferential sensor of claim 1, wherein the heat exchanger(104, 218) has a heat transfer coefficient.

**Amended claims in accordance with Rule 137(2) EPC.**

1. An inferential sensor for internal heat exchanger parameters, comprising:

a memory (436);
a processor (434) configured to execute executable instructions stored in the memory (436) to:

receive a number of measured process variables of the heat exchanger (104, 218), including:

a number of measured inlet process variables; and
a number of measured outlet process variables;

predict, using a dynamic differential model including the number of measured inlet process variables:

internal parameters of the heat exchanger(104, 218); and
a number of outlet process variables of the heat exchanger(104, 218),
wherein heat transfer from the hot fluid of the heat exchanger(104, 218) to the cold fluid of the heat exchanger(104, 218) is determined by a logarithmic mean temperature between a temperature of the hot fluid, the metal temperature of the heat exchange surface of the heat exchanger(104, 218), and a temperature of the cold fluid of the heat exchanger(104, 218);

compare the number of measured outlet process variables with the number of predicted outlet process variables; and
update, based on the comparison, the internal parameters of the heat exchanger(104, 218).

2. The inferential sensor of claim 1, wherein the number of measured inlet process variables include:

an inlet temperature of the hot fluid of the heat exchanger(104, 218);
an inlet temperature of the cold fluid of the heat exchanger(104, 218);
an inlet pressure of the hot fluid of the heat exchanger(104, 218);
an inlet pressure of the cold fluid of the heat exchanger(104, 218);
an inlet flow rate of the hot fluid of the heat exchanger(104, 218); and
an inlet flow rate of the cold fluid of the heat exchanger(104, 218).

3. The inferential sensor of claim 1, wherein the number of measured outlet process variables include:

an outlet temperature of the hot fluid of the heat exchanger(104, 218);

10

an outlet temperature of the cold fluid of the heat exchanger(104, 218);
an outlet pressure of the hot fluid of the heat exchanger(104, 218);
an outlet pressure of the cold fluid of the heat exchanger(104, 218);
an outlet flow rate of the hot fluid of the heat exchanger(104, 218); and
an outlet flow rate of the cold fluid of the heat exchanger(104, 218).

4. The inferential sensor of claim 1, wherein the internal parameters of the heat exchanger(104, 218) include a heat transfer coefficient of the heat exchanger(104, 218).

5. The inferential sensor of claim 1, wherein the internal parameters of the heat exchanger(104, 218) include metal tfcemperatures of a heat exchange surface of the heat exchanger(104, 218).

6. The inferential sensor of claim 1, wherein the processor (434) is configured to execute the instructions calculate an efficiency of the heat exchanger(104, 218) using the internal parameters of the heat exchanger(104, 218) and the number of measured process variables of the heat exchanger(104, 218).

7. The inferential sensor of claim 1, wherein the predicted number of outlet process variables include:

a predicted outlet temperature of the hot fluid of the heat exchanger(104, 218);
a predicted outlet temperature of the cold fluid of the heat exchanger(104, 218);
a predicted outlet pressure of the hot fluid of the heat exchanger(104, 218);
a predicted outlet pressure of the cold fluid of the heat exchanger(104, 218);
a predicted outlet flow rate of the hot fluid of the heat exchanger(104, 218); and
a predicted outlet flow rate of the cold fluid of the heat exchanger(104, 218).

8. The inferential sensor of claim 1, wherein the dynamic differential model includes a heat and mass balance of the number of measured inlet process variables and the number of measured outlet process variables, wherein the number of measured inlet process variables and the number of measured outlet process variables change with time, and wherein:

the heat and mass balance determines a metal temperature of the heat exchange surface of the heat exchanger(104, 218).

9. The inferential sensor of claim 1, wherein a nominal heat exchanger has a nominal heat transfer coefficient.

10. The inferential sensor of claim 1, wherein the heat exchanger(104, 218) has a heat transfer coefficient.

FIG. 1

**FIG. 2**

EP 3 165 867 A1

326 — RECEIVE A NUMBER OF MEASURED PROCESS VARIABLES OF THE HEAT EXCHANGER

328 — PREDICT INTERNAL PARAMETERS OF THE HEAT EXCHANGER AND A NUMBER OF OUTLET PROCESS VARIABLES BY A DYNAMIC DIFFERENTIAL MODEL USING A HEAT AND MASS BALANCE OF THE NUMBER OF MEASURED INLET PROCESS VARIABLES AND THE NUMBER OF MEASURED OUTLET PROCESS VARIABLES OF THE HEAT EXCHANGER

330 — COMPARE THE NUMBER OF MEASURED OUTLET PROCESS VARIABLES WITH THE NUMBER OF PREDICTED OUTLET PROCESS VARIABLES

332 — UPDATE, BASED ON THE COMPARISON, THE INTERNAL PARAMETERS OF THE HEAT EXCHANGER

# FIG. 3

EP 3 165 867 A1

406 — CONTROLLER

434 — PROCESSOR

436 — MEMORY

FIG. 4

Europäisches
Patentamt

European
Patent Office

Office européen
des brevets

# EUROPEAN SEARCH REPORT

Application Number

EP 15 19 3498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 682 835 A2 (HONEYWELL INT INC [US]) 8 January 2014 (2014-01-08) * abstract; claims * | 1-10 | INV. F28F27/00 F28G15/00 G01L3/26 G01N17/00 G05B23/02 |
| X | US 4 766 553 A (KAYA AZMI [US] ET AL) 23 August 1988 (1988-08-23) * abstract; claim claims * | 1-10 | |
| X | EP 0 155 826 A (BABCOCK & WILCOX CO) 25 September 1985 (1985-09-25) * the whole document * | 1-10 | |
| X | US 2008/183427 A1 (MILLER JOHN P [US]) 31 July 2008 (2008-07-31) * the whole document * | 1 | |
| X | US 2014/128997 A1 (HOLUB ONDREJ [CZ] ET AL) 8 May 2014 (2014-05-08) * figure 1 * | 1 | |
| | | | TECHNICAL FIELDS SEARCHED (IPC) |
| | | | F28F F28G G01L G01N G05B |

The present search report has been drawn up for all claims

| Place of search | Date of completion of the search | Examiner |
|---|---|---|
| Munich | 20 April 2016 | Mellado Ramirez, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 3 165 867 A1**

## ANNEX TO THE EUROPEAN SEARCH REPORT
### ON EUROPEAN PATENT APPLICATION NO.

EP 15 19 3498

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2016

| Patent document cited in search report | | Publication date | Patent family member(s) | | Publication date |
|---|---|---|---|---|---|
| EP 2682835 | A2 | 08-01-2014 | EP | 2682835 A2 | 08-01-2014 |
| | | | US | 2014008035 A1 | 09-01-2014 |
| US 4766553 | A | 23-08-1988 | NONE | | |
| EP 0155826 | A | 25-09-1985 | AU | 565509 B2 | 17-09-1987 |
| | | | AU | 3976485 A | 26-09-1985 |
| | | | BR | 8500511 A | 03-12-1985 |
| | | | CA | 1220274 A | 07-04-1987 |
| | | | DE | 3580929 D1 | 31-01-1991 |
| | | | EP | 0155826 A2 | 25-09-1985 |
| | | | ES | 8603051 A1 | 16-03-1986 |
| | | | HK | 31291 A | 03-05-1991 |
| | | | IN | 161899 B | 20-02-1988 |
| | | | JP | S60207900 A | 19-10-1985 |
| | | | MX | 162084 A | 25-03-1991 |
| US 2008183427 | A1 | 31-07-2008 | CN | 101601023 A | 09-12-2009 |
| | | | EP | 2115608 A1 | 11-11-2009 |
| | | | US | 2008183427 A1 | 31-07-2008 |
| | | | WO | 2008094757 A1 | 07-08-2008 |
| US 2014128997 | A1 | 08-05-2014 | NONE | | |

EPO FORM P0459

For more details about this annex : see Official Journal of the European Patent Office, No. 12/82